# FASCICULE DE BREVET EUROPEEN

(11) **EP 4 076 911 B1**
(45) Date de publication et mention de la délivrance du brevet: **22.11.2023**
(21) Numéro de dépôt: 20848803.1
(22) Date de dépôt: 17.12.2020
(51) Int. Cl.: B29C 70/34, B29C 70/28, F02K 1/64, B29C 70/06

(54) **PROCÉDÉ DE FABRICATION D'UNE GRILLE EN MATÉRIAU COMPOSITE**
VERFAHREN ZUM HERSTELLEN EINES AUS EINEM VERBUNDWERKSTOFF GEFERTIGTEN GITTERS
METHOD FOR MANUFACTURING A GRID MADE OF A COMPOSITE MATERIAL

(30) Priorité: 19.12.2019 FR 1915028
(43) Date de publication de la demande: 26.10.2022
(73) Titulaire: SAFRAN, 75015 Paris (FR)
(72) Inventeur: LANFANT, Nicolas Pierre, 77550 MOISSY-CRAMAYEL (FR); FARRANDS, Maximilien Eddie, 77550 MOISSY-CRAMAYEL (FR); GERAUD-GROSHENY, Pierre François Robin, 77550 MOISSY-CRAMAYEL (FR)
(74) Mandataire: Gevers & Orès
(86) Numéro de dépôt international: PCT/FR2020/052501
(87) Numéro de publication internationale: WO 2021/123639

(56) Documents cités:
- EP-A2- 0 219 889
- WO-A2-2018/169453
- JP-A- H0 716 935
- US-A- 4 173 307
- US-B1- 9 587 582

## Description

### Domaine technique de l'invention

L'invention est relative au domaine de la fabrication de pièces mécaniques pour des nacelles de turboréacteurs d'aéronef. Elle se rapporte, en particulier, à un procédé de fabrication d'une grille en matériau composite telle qu'une grille d'inverseur de poussée pour une telle nacelle.

### Arrière-plan technique

L'état de la technique comprend notamment les documents EP-A2-0 219 889, JP-A-H07 16935, WO-A2-2018/169453, US-A-4 173 307 et US-B1-9 587 582.

Les systèmes d'inversion de poussée ou inverseurs sont aujourd'hui largement répandus dans les aéronefs. Leur rôle est d'exploiter une partie du flux d'air éjecté à l'arrière des nacelles de turboréacteur pour contribuer au freinage de l'aéronef en cas de besoin. En particulier, lors de l'atterrissage d'un aéronef, la capacité de freinage dudit aéronef peut être sensiblement améliorée en redirigeant vers l'avant au moins une partie de l'air éjecté par le turboréacteur.

Plus précisément, l'inverseur permet de réorienter une partie du flux d'air vers l'avant de la nacelle ce qui génère une contrepoussée qui vient s'ajouter au freinage des roues et des aérofreins.

Dans le cas d'un inverseur dit à grilles de déviation, également appelées grilles d'inverseur de poussée, la réorientation du flux d'air est effectuée par des grilles, associées à des volets d'inversion, qui bloquent au moins partiellement une veine de circulation d'air. Un capot coulissant permet en outre de découvrir ou de recouvrir ces grilles d'inverseur de poussée.

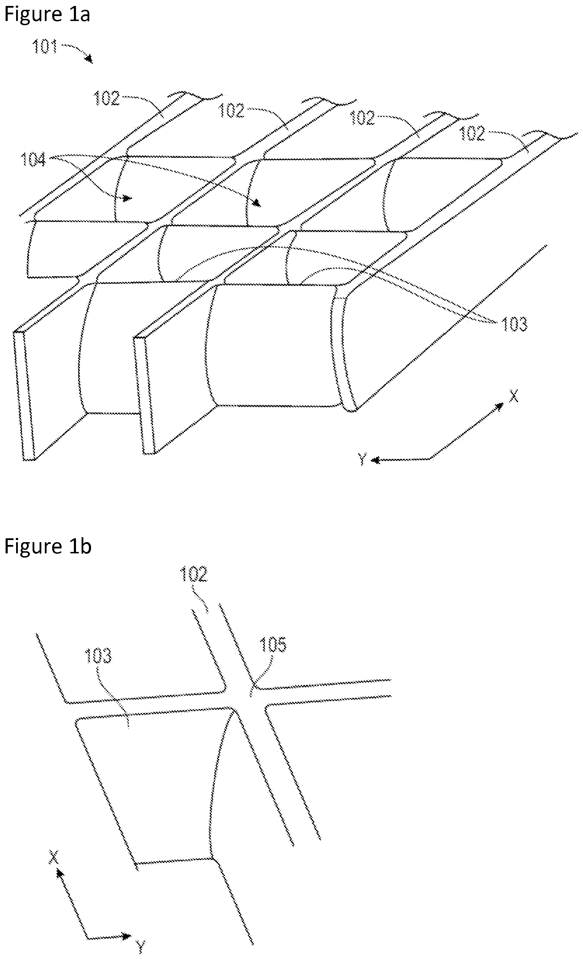

Les figures 1a et 1b montrent un exemple de réalisation d'une grille d'inversion de poussée 101. De manière connue, une telle grille est constituée, d'une part, de longerons 102 qui remplissent la fonction de support et, d'autre part, d'aubes 103 qui contribuent effectivement à orienter le flux d'air. Les longerons et les aubes s'étendent longitudinalement, respectivement, selon deux directions sensiblement perpendiculaires et forment les contours de cellules creuses 104 aussi appelées alvéoles. En outre, les longerons et les aubes se joignent au niveau de croisillons 105 dont la solidité conditionne largement la solidité de la grille dans son ensemble.

Ces grilles sont réalisées dans des matériaux composites. Classiquement, les longerons sont réalisés dans un matériau dit à fibres continues (ou longues). Plus précisément, les longerons sont formés à partir de plis superposés d'un matériau alors que les aubes sont formées à partir d'un pli positionné de manière adaptée pour former les alvéoles de la grille. Le ou les matériaux utilisés ont des propriétés mécaniques spécifiques, adaptées à leur fonction et l'ensemble est lié par une matrice, typiquement une résine thermodurcissable ou thermoplastique, qui uni les différents éléments, défini la forme globale de la grille et assure la transmission des efforts mécaniques.

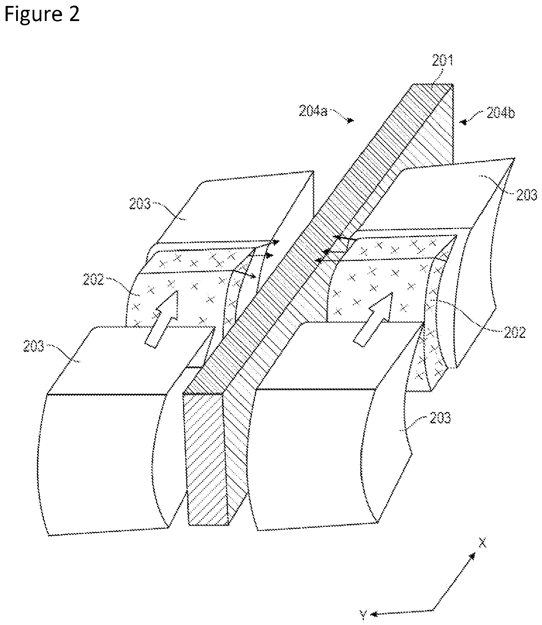

La déposante a suivi jusqu'ici une approche de fabrication visant à réaliser simplement et de manière économique une telle grille. La figure 2 illustre cette approche dans laquelle un longeron en fibres continues 201 est positionné, parallèlement à d'autres longerons non représentés, selon une première direction. Des éléments de liaison 202, dans un matériau composite en fibres discontinues, sont positionnés de part et d'autre du longeron 201, le long des faces latérales 204a et 204b dudit longeron 201.

Le tout est placé dans un dispositif de thermocompression (non-représenté), comme par exemple un autoclave ou un outillage sous-presse, dans lequel l'ensemble est porté à une température et une pression qui rendent les matériaux fluables et les éléments de liaisons sont comprimés par des moyens de compression 203 adaptés pour former les futures aubes de la grille et délimiter ainsi les cellules de la grille fabriquée. Par fluable on désigne l'état d'un matériau apte à s'écouler. Au cours de cette opération, une partie du matériau qui compose les éléments de liaison migre vers les longerons et se lie, par liaison chimique et/ou par liaison mécanique, avec le matériau qui compose ces longerons.

Cette liaison reste toutefois relativement superficielle. En effet, la façon dont migre le matériau composite en fibres discontinues, et en particulier les fibres elles-mêmes, est aléatoire. Les surfaces de recouvrement (entre le matériau des éléments de liaison et les faces latérales des longerons) peuvent être assez faibles, ce qui entraîne alors des performances de résistance mécanique de l'ensemble elles aussi, faibles.

Or, il est justement attendu d'une grille d'inverseur de poussée, d'une part, qu'elle présente une raideur déterminée dans le sens de sa longueur et, d'autre part, qu'elle offre une bonne tenue mécanique des interfaces aubes-longeron (i.e. des croisillons). En effet, la bonne tenue mécanique de ces interfaces conditionne, d'une part, la résistance de l'aube à la pression du flux d'air (en particulier lors des phases de génération d'inversion de poussée) et, d'autre part, la résistance de la grille aux impacts éventuels de corps étrangers.

### Résumé de l'invention

La présente invention propose une solution permettant à la fois d'obtenir une grille qui bénéficie des propriétés de raideur et de résistance de fibres unidirectionnelles utilisées pour la réalisation de longerons et d'obtenir, au cours de la fabrication, un ancrage mécanique des aubes sur les longerons et donc un renforcement des interfaces aubes-longeron.

À cet effet, selon un premier aspect, l'invention concerne un procédé de fabrication d'une grille en matériau composite de redressement d'un flux d'air pour une turbomachine d'aéronef, ce procédé comprenant les étapes suivantes :
a) positionnement, dans un dispositif de thermocompression, de longerons s'étendant longitudinalement selon une première direction, lesdits longerons étant réalisés dans un premier matériau comportant des fibres s'étendant parallèlement à la première direction, ces longerons comportant des faces latérales comportant des évidements ;
b) positionnement, dans le dispositif de thermocompression, entre les faces latérales des longerons, d'éléments de liaison, réalisés dans un second matériau thermo-compressible ; et,
c) soumission, par le dispositif de thermocompression, des longerons et des éléments de liaison à une température déterminée et à une pression déterminée, adaptées pour faire pénétrer une partie des éléments de liaison dans lesdits évidements de manière à assurer un ancrage mécanique des éléments de liaison dans les évidements desdits longerons.

Le procédé selon l'invention peut comprendre une ou plusieurs des caractéristiques suivantes, prises isolément les unes des autres ou en combinaison les unes avec les autres :
- lors de l'étape b), les éléments de liaison sont positionnés selon une direction sensiblement perpendiculaire à la première direction, de préférence entre des noyaux d'outillage.
- les longerons sont réalisés à partir de fibres continues, par exemple des fibres de carbone, arrangées selon des plis unidirectionnels drapés, selon un tissage bidimensionnel, selon un tissage tridimensionnel ou selon une combinaison de ces arrangements.
- les longerons sont réalisés à partir de fibres discontinues longues.
- les évidements sont obtenus par l'intermédiaire de moyens de découpe, manuels ou automatiques, tels qu'une machine d'usinage, une lame oscillante, des ondes ultrasons, des ciseaux, un scalpel ou un poinçon.
- les évidements sont des trous borgnes, des fentes ou des trous traversant.
- le second matériau thermo-compressible est réalisé à partir de la découpe en chips de plis de fibres continues pré-imprégnées d'une résine.
- le second matériau thermo-compressible comprend des fibres et une résine thermodurcissable appartenant à la famille des époxydes, des benzoxasines, des polyesters ou des bismaléimides.
- le second matériau thermo-compressible comprend des fibres et une résine thermoplastique appartenant à la familles des polyamides, des polypropylènes, des PEEK, des PEKK, des PPS, des PSA ou des PA.
- le dispositif de thermocompression comprend des moyens de compression et/ou des moyens de moulage et/ou des moyens d'injections adaptés pour former des cellules creuses, délimitées par les longerons et les éléments de liaison, à l'issue de l'étape c).
- la formation de cellules creuses est réalisée par injection thermoplastique de fibres courtes entre des noyaux d'outillage.
- lors des étapes b) et c), le second matériau thermo-compressible des éléments de liaison, réalisé en fibres discontinues, est contenu dans une cavité d'outillage et chassé de la cavité par un piston, de manière à faire pénétrer une partie des éléments de liaison dans les évidements et assurer un ancrage mécanique des éléments de liaison aux longerons.

L'invention concerne également, selon un deuxième aspect, une grille en matériau composite de redressement d'un flux d'air pour une turbomachine d'aéronef, cette grille étant réalisée par un procédé selon le premier aspect et comportant des longerons parallèles formés dans un premier matériau comportant des fibres s'étendant parallèlement à la direction de l'étendue longitudinale desdits longerons et reliés entre eux par des éléments de liaison formés dans un second matériau et ancrés mécaniquement dans des évidements desdits longerons.

L'invention concerne enfin, selon un troisième aspect, une turbomachine, en particulier d'aéronef, comportant une grille selon le deuxième aspect, cette grille faisant par exemple partie d'un inverseur de poussée.

### Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1a] la figure 1a est une représentation schématique d'un mode de réalisation d'une grille en matériau composite selon l'art antérieur ;
[Fig. 1b] la figure 1b est un zoom sur la zone d'intersection des longerons et des aubes d'une grille en matériau composite selon l'art antérieur ;
[Fig. 2] la figure 2 est une représentation schématique d'un mode de mise en oeuvre d'un procédé de fabrication d'une grille en matériau composite selon l'art antérieur ;
[Fig. 3] la figure 3 est une représentation schématique d'un mode de mise en oeuvre d'un procédé de fabrication d'une grille en matériau composite selon l'invention ;
[Fig. 4] la figure 4 est une représentation schématique d'un mode de réalisation d'une grille en matériau composite selon l'invention ;
[Fig. 5] la figure 5 est un vue en perspective de modes de réalisation de longerons d'une grille en matériau composite selon l'invention ;
[Fig. 6] la figure 6 est une vue de face de modes de réalisation de longerons d'une grille en matériau composite selon l'invention ;
[Fig. 7] la figure 7 est une représentation schématique d'un autre mode de mise en oeuvre d'un procédé de fabrication d'une grille en matériau composite selon l'invention ; et,
[Fig. 8] la figure 8 est un diagramme d'étape d'un mode de mise en oeuvre d'un procédé de fabrication d'une grille en matériau composite selon l'invention ;

Les éléments ayant les mêmes fonctions dans les différents modes de réalisation ont les mêmes références dans les figures.

### Description détaillée de l'invention

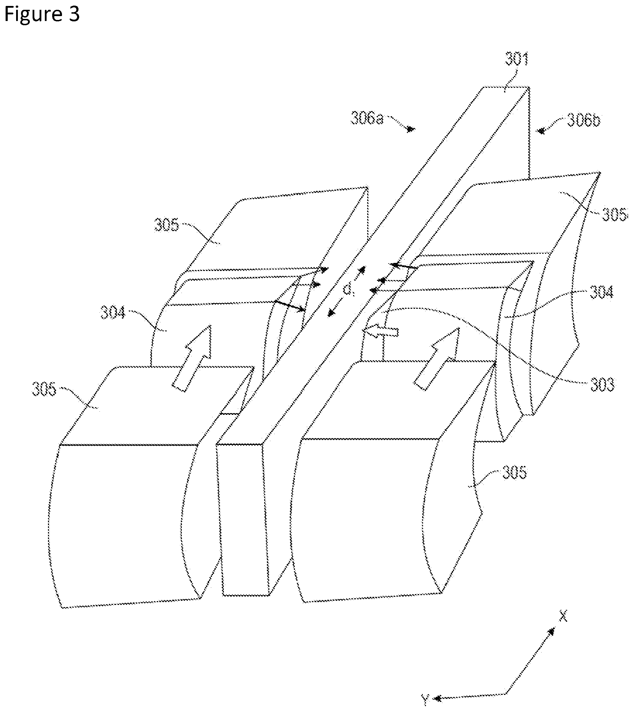

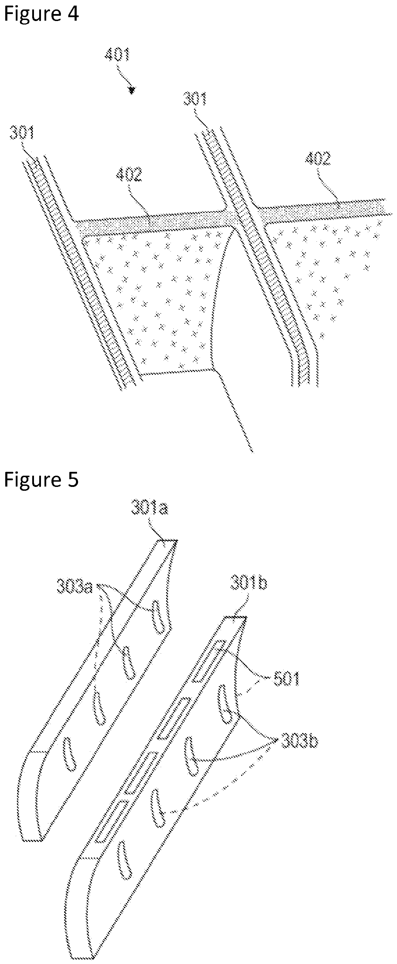

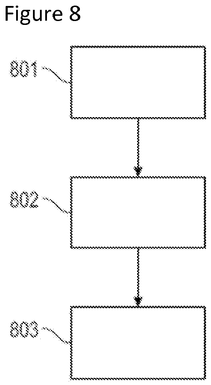

En référence à la figure 3, à la figure 4 et à la figure 8 nous allons maintenant décrire un mode de mise en oeuvre du procédé de fabrication d'une grille en matériau composite selon l'invention. L'invention concerne en particulier la fabrication de grilles de redressement d'un flux d'air pour une turbomachine d'aéronef. Toutefois, l'homme du métier appréciera que le procédé s'applique, de manière générale, à la fabrication de toute grille en matériau composite qui comporte des éléments alignés dans une première direction et des éléments alignés dans une seconde direction qui forment ensemble des cellules creuses.

La première étape 801 consiste en un positionnement, dans un dispositif de thermocompression, de longerons 301 qui s'étendent longitudinalement selon une première direction d1. Dans l'exemple représenté, un seul longeron 301 est représenté, aligné selon la direction d1, parallèle à l'axe X. Le dispositif de thermocompression peut être, par exemple, un autoclave dans lequel sont placés les longerons.

Les longerons sont réalisés dans un premier matériau qui comporte des fibres qui s'étendent parallèlement à la première direction. Dans un exemple non-limitatif, les longerons sont réalisés à partir de fibres continues, par exemple des fibres de carbone, qui sont arrangées selon des plis unidirectionnels drapés, selon un tissage bidimensionnel, selon un tissage tridimensionnel ou selon une combinaison de ces arrangements. Avantageusement, ces arrangements permettent d'obtenir une résistance mécanique déterminée dans une ou plusieurs directions voulues. En outre, pour des longerons constitués de fibres arrangées en plis unidirectionnels drapés, un compactage et/ou une pré-cuisson du longeron peuvent avoir été réalisés préalablement à la fabrication de la grille afin d'améliorer la tenue en forme du longeron. Ainsi, dans les différentes variantes du procédé, les longerons utilisés peuvent être dits crus ou partiellement précuits ou totalement précuits. Les configurations optimales étant crus et partiellement précuits, comme, par exemple, de 50 à 60% d'avancement de la polymérisation de la résine.

Dans une variante, les longerons peuvent être réalisés en fibres dites discontinues longues, c'est-à-dire, des longerons réalisés à partir de plis coupés à une longueur supérieure à celles de fibres dites courtes mais néanmoins coupées donc appelées discontinues.

Enfin, les longerons comportent des faces latérales 306a et 306b qui comportent elles-mêmes des évidements 303. Comme il apparaîtra plus clairement dans ce qui suit, la présence de ces évidements permet à un second matériau utilisé pour la fabrication de la grille de se diffuser à travers les longerons au cours de la fabrication. En particulier, dans la mesure où, sans la présence de ces évidements, l'utilisation de fibres continues pour les longerons constituerait une barrière empêchant la diffusion d'un autre matériau en leur sein.

Les évidements peuvent être obtenus par l'intermédiaire de moyens de découpe, manuels ou automatiques, tels qu'une machine d'usinage, une lame oscillante, des ondes ultrasons, des ciseaux, un scalpel ou un poinçon. De plus, selon les différents modes mise en oeuvre du procédé de fabrication, les évidements peuvent être des trous borgnes, des fentes ou des trous traversant.

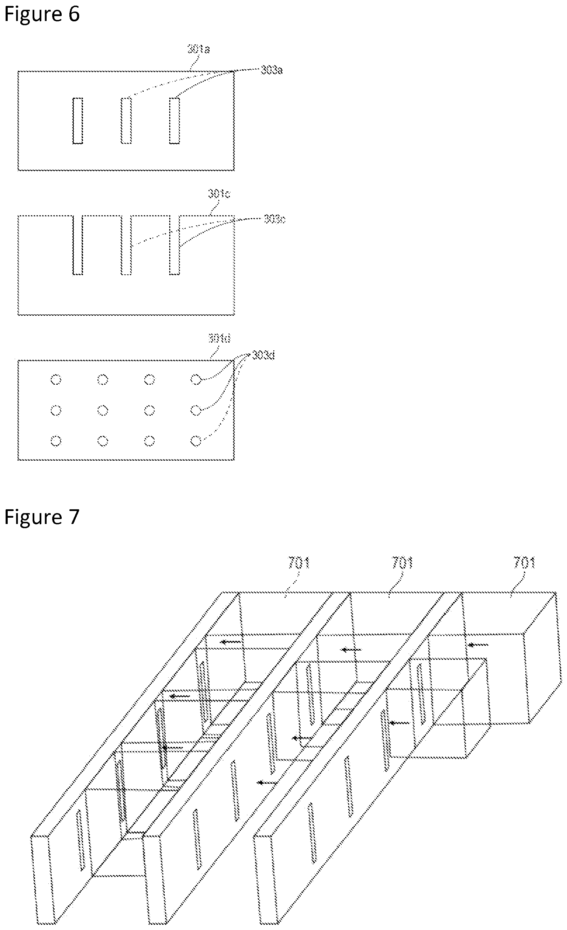

Les figures 5 et 6 illustrent, respectivement, en vue en perspective et en vue de face, des modes de réalisation de longerons selon l'invention. Ainsi, dans les exemples représentés, les évidements 303a ont la forme de trous rectangulaires, les évidements 303d ont la forme de trous circulaires, les évidements 303c débouchent sur une autre face des longerons (qui n'est pas une face latérale) et les évidements 303b débouchent sur des cavités 501 qui débouchent elles-mêmes sur une autre face des longerons.

Avantageusement, la forme et la répartition des évidements peuvent être adaptées pour optimiser la résistance mécanique obtenue, à l'issue du procédé de fabrication, au niveau des croisillons de la grille.

L'étape 802 consiste en un positionnement, dans le dispositif de thermocompression, entre les faces latérales des longerons, d'éléments de liaison 304, réalisés dans un second matériau thermo-compressible. Dans un mode de réalisation particulier, les éléments de liaison sont positionnés, entre des noyaux d'outillage, dans une direction sensiblement perpendiculaire à la direction d1 des longerons. Le second matériau thermo-compressible peut être un matériau à fibres discontinues comme par exemple un matériau réalisé à partir de la découpe en chips de plis de fibres continues pré-imprégnées d'une résine, comme par exemple le matériau HexMC, du fabricant Hexcel. L'intérêt de ce matériau est notamment sa capacité à fluer, c'est-à-dire à s'écouler lorsqu'il est soumis à des conditions de température et de pression adaptées.

Dans un mode de mise en oeuvre particulier du procédé, le second matériau thermo-compressible comprend des fibres et une résine thermodurcissable appartenant à la famille des époxydes, des benzoxasines, des polyesters ou des bismaléimides. Dans un autre mode de mise en oeuvre particulier du procédé, le second matériau thermo-compressible comprend des fibres et une résine thermoplastique appartenant à la famille des polyamides, des polypropylènes, des PEEK, des PEKK, des PPS, des PSA ou des PA. Avantageusement, le matériau thermo-compressible utilisé peut être choisi selon sa capacité à fluer, sa résistance mécanique une fois durci ou toute autre propriété adaptée pour optimiser les propriétés de la grille dans son ensemble.

L'étape finale 803 du procédé de fabrication consiste en la soumission, par le dispositif de thermocompression, des longerons et des éléments de liaison à une température déterminée et à une pression déterminée, qui sont adaptées pour faire pénétrer une partie des éléments de liaison dans lesdits évidements de manière à assurer un ancrage mécanique des éléments de liaison aux longerons. Dit autrement, en chauffant et en comprimant les éléments de liaison 304 la matière qui les compose migre à la fois sur les faces latérales 306a et 306b des longerons mais aussi dans les évidements 303 de ces faces latérales. Avantageusement, les croisillons ainsi formés offrent une résistance mécanique élevée. En particulier, grâce au fait que le procédé de fabrication permet, d'une part, d'obtenir une continuité des fibres entre les longerons et les éléments de liaison et, d'autre part, d'obtenir aussi une continuité des fibres entre les éléments de liaison de part et d'autre des longerons.

Finalement, comme l'illustre la figure 4, la grille en matériau composite 401 ainsi fabriquée comporte des longerons parallèles 301 formés dans le premier matériau et reliés entre eux par des éléments de liaison 402 (des aubes dans le cas d'une grille d'inversion de poussée) formés dans le second matériau et ancrés mécaniquement dans des évidements des longerons.

En outre, dans différents modes de mise en oeuvre du procédé de fabrication, le dispositif de thermocompression peut comprendre des moyens de compression et/ou des moyens de moulage et/ou des moyens d'injections adaptés pour former les cellules creuses de la grille qui sont délimitées par les longerons et les éléments de liaison à l'issue du procédé de fabrication.

Par exemple, dans un premier mode de mise en oeuvre en référence à la figure 3, des noyaux d'outillage 305 sont positionnés de part et d'autre des éléments de liaison et les éléments de liaison sont comprimés sous l'action d'un vérin poussant certains de ces noyaux dans la direction des longerons.

Dans un autre mode de mise en oeuvre, les noyaux d'outillage peuvent présenter une capacité à s'étendre sous l'effet de la température (i.e. à se dilater) ou de l'insertion d'un autre outil en leur sein de manière à comprimer entre eux les éléments de liaison.

Dans un autre mode de mise en oeuvre encore, illustré par la figure 7, les longerons sont disposés entre les noyaux 701 d'un outillage et le second matériau des éléments de liaison, est directement injecté, dans un état lui permettant de fluer, entre ces noyaux, selon une direction transverse à celle des longerons. En outre, l'étape d'injection peut être une injection thermoplastique de fibres courtes entre des noyaux d'outillage agencés pour permettre la formation des cellules. Avantageusement, les fibres contenues dans le second matériau sont ainsi alignées au moment de la fabrication. Enfin, de manière complémentaire, le second matériau, réalisé en fibre discontinues, peut être contenu dans des cavités d'un outillage et chassé desdites cavité sous l'effet d'un piston de manière à circuler entre les noyaux de l'outillage.

## Revendications

1. Procédé de fabrication d'une grille en matériau composite (401) de redressement d'un flux d'air pour une turbomachine d'aéronef, ce procédé comprenant les étapes suivantes :
a) positionnement (801), dans un dispositif de thermocompression, de longerons (301) s'étendant longitudinalement selon une première direction (d1), lesdits longerons étant réalisés dans un premier matériau comportant des fibres s'étendant parallèlement à la première direction, ces longerons comportant des faces latérales comportant des évidements ;
b) positionnement (802), dans le dispositif de thermocompression, entre les faces latérales des longerons, d'éléments de liaison (304), réalisés dans un second matériau thermo-compressible ; et,
c) soumission (803), par le dispositif de thermocompression, des longerons et des éléments de liaison à une température déterminée et à une pression déterminée, adaptées pour faire pénétrer une partie des éléments de liaison dans lesdits évidements de manière à assurer un ancrage mécanique des éléments de liaison dans les évidements desdits longerons.

2. Procédé de fabrication selon la revendication 1, dans lequel, lors de l'étape b), les éléments de liaison sont positionnés selon une direction sensiblement perpendiculaire à la première direction, de préférence entre des noyaux d'outillage.

3. Procédé de fabrication selon l'une quelconque des revendications 1 et 2, dans lequel les longerons sont réalisés à partir de fibres continues, par exemple des fibres de carbone, arrangées selon des plis unidirectionnels drapés, selon un tissage bidimensionnel, selon un tissage tridimensionnel ou selon une combinaison de ces arrangements.

4. Procédé de fabrication selon l'une quelconques des revendications 1 et 2, dans lequel les longerons sont réalisés à partir de fibres discontinues longues.

5. Procédé de fabrication selon l'une quelconque des revendications 1 à 4, dans lequel les évidements sont obtenus par l'intermédiaire de moyens de découpe, manuels ou automatiques, tels qu'une machine d'usinage, une lame oscillante, des ondes ultrasons, des ciseaux, un scalpel ou un poinçon.

6. Procédé de fabrication selon l'une quelconque des revendications 1 à 5, dans lequel les évidements sont des trous borgnes, des fentes ou des trous traversant.

7. Procédé de fabrication selon l'une quelconque des revendications 1 à 6, dans lequel le second matériau thermo-compressible est réalisé à partir de la découpe en chips de plis de fibres continues pré-imprégnées d'une résine.

8. Procédé de fabrication selon l'une quelconque des revendications 1 à 7, dans lequel le second matériau thermo-compressible comprend des fibres et une résine thermodurcissable appartenant à la famille des époxydes, des benzoxasines, des polyesters ou des bismaléimides.

9. Procédé de fabrication selon l'une quelconque des revendications 1 à 8, dans lequel le second matériau thermo-compressible comprend des fibres et une résine thermoplastique appartenant à la famille des polyamides, des polypropylènes, des PEEK, des PEKK, des PPS, des PSA ou des PA.

10. Procédé de fabrication selon l'une quelconque des revendications 1 à 7, dans lequel le dispositif de thermocompression comprend des moyens de compression et/ou des moyens de moulage et/ou des moyens d'injections adaptés pour former des cellules creuses, délimitées par les longerons et les éléments de liaison, à l'issue de l'étape c).

11. Procédé de fabrication selon la revendication 10, dans lequel, la formation de cellules creuses est réalisée par injection thermoplastique de fibres courtes entre des noyaux d'outillage.

12. Procédé de fabrication selon la revendication 10, dans lequel, lors des étapes b) et c), le second matériau thermo-compressible des éléments de liaison, réalisé en fibres discontinues, est contenu dans une cavité d'outillage et chassé de la cavité par un piston, de manière à faire pénétrer une partie des éléments de liaison dans les évidements et assurer un ancrage mécanique des éléments de liaison aux longerons.

13. Grille en matériau composite (401) de redressement d'un flux d'air pour une turbomachine d'aéronef, cette grille étant réalisée par un procédé selon l'une des revendications précédentes et comportant des longerons parallèles (301) formés dans un premier matériau comportant des fibres s'étendant parallèlement à la direction de l'étendue longitudinale desdits longerons et reliés entre eux par des éléments de liaison (402) formés dans un second matériau et ancrés mécaniquement dans des évidements desdits longerons.

14. Turbomachine, en particulier d'aéronef, comportant une grille selon la revendication 13, cette grille faisant par exemple partie d'un inverseur de poussée.

## Patentansprüche

1. Herstellungsverfahren eines Gitters aus einem Verbundwerkstoff (401) zum Auffangen eines Luftstroms für eine Turbomaschine eines Flugzeugs, wobei dieses Verfahren die folgenden Schritte umfasst:
a) Positionierung (801), in einer Vorrichtung zur Thermokompression, von Holmen (301), die sich längslaufend entlang einer ersten Richtung (d1) erstrecken, wobei die Holme aus einem ersten Werkstoff hergestellt sind, der Fasern umfasst, die sich parallel zur ersten Richtung erstrecken, wobei diese Holme Seitenflächen umfassen, die Aussparungen umfassen;
b) Positionierung (802), in der Vorrichtung zur Thermokompression, zwischen den Seitenflächen der Holme, von Verbindungselementen (304), die aus einem zweiten thermokomprimierbaren Werkstoff hergestellt sind; und
c) Unterziehen (803) der Holme und der Verbindungselemente, durch die Vorrichtung zur Thermokompression, einer bestimmten Temperatur und einem bestimmten Druck, die angepasst sind, um einen Teil der Verbindungselemente dazu zu bringen, derart in die Aussparungen einzutreten, dass sie eine mechanische Verankerung der Verbindungselemente in den Aussparungen der Holme gewährleisten.

2. Herstellungsverfahren nach Anspruch 1, wobei beim Schritt b) die Verbindungselemente in einer Richtung im Wesentlichen senkrecht zur ersten Richtung positioniert sind, vorzugsweise zwischen Werkzeugkernen.

3. Herstellungsverfahren nach einem der Ansprüche 1 und 2, wobei die Holme ausgehend von durchgehenden Fasern, beispielsweise Kohlenstofffasern, hergestellt sind, die entlang unidirektionaler Falten angeordnet sind, die entlang einem zweidimensionalen Webmuster, entlang einem dreidimensionalen Webmuster oder entlang einer Kombination dieser Anordnungen in Falten gelegt sind.

4. Herstellungsverfahren nach einem der Ansprüche 1 und 2, wobei die Holme ausgehend von langen nicht durchgehenden Fasern hergestellt sind.

5. Herstellungsverfahren nach einem der Ansprüche 1 bis 4, wobei die Aussparungen mittels manueller oder automatischer Schneidemitteln, wie etwa einer Bearbeitungsmaschine, einer oszillierenden Klinge, Ultraschallwellen, einer Schere, einem Skalpell oder einem Locheisen erhalten werden.

6. Herstellungsverfahren nach einem der Ansprüche 1 bis 5, wobei die Aussparungen Sacklöcher, Schlitze oder durchgehende Löcher sind.

7. Herstellungsverfahren nach einem der Ansprüche 1 bis 6, wobei der zweite thermokomprimierbare Werkstoff ausgehend von dem Schnitt in Chips von mit einem Harz vorab imprägnierten durchgehenden Faserfalten hergestellt ist.

8. Herstellungsverfahren nach einem der Ansprüche 1 bis 7, wobei der zweite thermokomprimierbare Werkstoff Fasern und ein hitzehärtbares Harz umfasst, das zur Familie der Epoxyde, der Benzoxasine, der Polyester oder der Bismaleimide gehört.

9. Herstellungsverfahren nach einem der Ansprüche 1 bis 8, wobei der zweite thermokomprimierbare Werkstoff Fasern und ein thermoplastisches Harz umfasst, das zur Familie der Polyamide, der Polypropylene, der PEEK, der PEKK, der PPS, der PSA oder der PA gehört.

10. Herstellungsverfahren nach einem der Ansprüche 1 bis 7, wobei die Vorrichtung zur Thermokompression Komprimierungsmittel und/oder Gussmittel und/oder Einspritzmittel umfasst, die angepasst sind, nach Abschluss von Schritt c) Hohlzellen zu bilden, die von den Holmen und den Verbindungselementen begrenzt werden.

11. Herstellungsverfahren nach Anspruch 10, wobei die Bildung von Hohlzellen durch thermoplastische Einspritzung von kurzen Fasern zwischen den Werkzeugkernen erfolgt.

12. Herstellungsverfahren nach Anspruch 10, wobei bei den Schritten b) und c) der zweite thermokomprimierbare Werkstoff der Verbindungselemente, der aus nicht durchgehenden Fasern hergestellt ist, in einem Werkzeughohlraum enthalten ist und durch einen Kolben derart aus dem Hohlraum getrieben wird, dass ein Teil der Verbindungselemente dazu gebracht wird, in die Aussparungen einzutreten und eine mechanische Verankerung der Verbindungselemente mit den Holmen zu gewährleisten.

13. Gitter aus Verbundwerkstoff (401) zum Auffangen eines Luftstroms für eine Turbomaschine eines Flugzeugs, wobei dieses Gitter durch ein Verfahren nach einem der vorstehenden Ansprüche hergestellt wird und parallele Holme (301) umfasst, die aus einem ersten Werkstoff gebildet sind, der Fasern umfasst, die sich parallel zur Richtung der Längserstreckung der Holme erstreckt, und über Verbindungselemente (402), die aus einem zweiten Werkstoff gebildet sind und mechanisch in den Aussparungen der Holme verankert sind, untereinander verbunden sind.

14. Turbomaschine, insbesondere eines Flugzeugs, umfassend ein Gitter nach Anspruch 13, wobei dieses Gitter beispielsweise Teil eines Schubumkehrers ist.

## Claims

1. A method for manufacturing a grid (401) made of composite material for straightening an air flow for an aircraft turbomachine, this method comprising the following steps:
a) positioning (801), in a thermocompression device, spars (301) extending longitudinally in a first direction (d1), said spars being made of a first material comprising fibres extending parallel to the first direction, these spars comprising lateral faces comprising recesses;
b) positioning (802), in the thermocompression device, between the lateral faces of the spars, connecting elements (304), made of a second thermo-compressible material; and,
c) subjecting (803), by the thermocompression device, the spars and the connecting elements to a determined temperature and a determined pressure, adapted to cause a portion of the connecting elements to penetrate said recesses so as to ensure a mechanical anchoring of the connecting elements in said recesses of the spars.

2. The manufacturing method of claim 1, wherein during the step b), the connecting elements are positioned in a direction substantially perpendicular to the first direction, preferably between tooling cores.

3. The manufacturing method according to any one of claims 1 and 2, wherein the spars are made from continuous fibres, for example, carbon fibres, arranged in draped unidirectional folds, in a two-dimensional weaving, in a three-dimensional weaving, or in a combination of these arrangements.

4. The manufacturing method according to any one of claims 1 and 2, wherein the spars are made from long discontinuous fibres.

5. The manufacturing method according to any one of claims 1 to 4, wherein the recesses are obtained by means of manual or automatic cutting means, such as a machining machine, an oscillating blade, ultrasonic waves, scissors, a scalpel or a punch.

6. The manufacturing method according to any one of claims 1 to 5, wherein the recesses are blind holes, slots or through holes.

7. The manufacturing method according to any one of claims 1 to 6, wherein the second thermo-compressible material is made from the cutting of continuous fibre folds pre-impregnated with a resin into chips.

8. The manufacturing method according to any one of claims 1 to 7, wherein the second thermo-compressible material comprises fibres and a thermosetting resin belonging to the family of epoxides, benzoxasins, polyesters or bismaleimides.

9. The manufacturing method according to any one of claims 1 to 8, wherein the second thermo-compressible material comprises fibres and a thermoplastic resin belonging to the family of polyamides, polypropylenes, PEEK, PEKK, PPS, PSA or PA.

10. The manufacturing method according to any one of claims 1 to 7, wherein the thermocompression device comprises compression means and/or moulding means and/or injection means adapted to form hollow cells, delimited by the spars and the connecting elements, at the end of the step c).

11. The manufacturing method of claim 10, wherein, the formation of hollow cells is made by thermoplastic injection of short fibres between tooling cores.

12. The manufacturing method according to claim 10, wherein during the steps b) and c) the second thermo-compressible material of the connecting elements, made of discontinuous fibres, is contained in a tooling cavity and pushed out of the cavity by a piston, so as to cause a portion of the connecting elements to penetrate into the recesses and ensure a mechanical anchoring of the connecting elements to the spars.

13. A grid (401) made of composite material for straightening an air flow for an aircraft turbomachine, this grid being made by a method according to one of the preceding claims and comprising parallel spars (301) formed from a first material comprising fibers extending parallel to the direction of the longitudinal extent of said spars and connected together by connecting elements (402) formed from a second material and mechanically anchored in recesses of said spars.

14. A turbomachine, in particular for an aircraft, comprising a grid according to claim 13, this grid being for example part of a thrust reverser.
